# EUROPÄISCHE PATENTSCHRIFT

(11) **EP 1 248 899 B1**
(45) Veröffentlichungstag und Bekanntmachung des Hinweises auf die Patenterteilung: **22.06.2005**
(21) Anmeldenummer: 01907377.4
(22) Anmeldetag: 19.01.2001
(51) Int. Cl.: F01L 9/04

(54) **VERFAHREN ZUM STEUERN EINES STELLGERÄTS**
METHOD FOR CONTROLLING AN ACTUATOR
PROCEDE POUR LA COMMANDE D'UN APPAREIL DE REGLAGE

(30) Priorität: 20.01.2000 DE 10002322
(43) Veröffentlichungstag der Anmeldung: 16.10.2002
(73) Patentinhaber: SIEMENS AKTIENGESELLSCHAFT, 80333 München (DE)
(72) Erfinder: AIGN, Torsten, 93173 Thanhausen (DE); BURKHARDT, Thomas, 93093 Donaustauf (DE); KILGER, Michael, 93326 Abensberg (DE); BASTIAN, Jürgen, 93059 Regensburg (DE)
(86) Internationale Anmeldenummer: PCT/DE2001/000225
(87) Internationale Veröffentlichungsnummer: WO 2001/053662

(56) Entgegenhaltungen:
- EP-A- 0 816 644
- DE-A- 4 434 684
- DE-A- 19 806 619
- DE-A- 19 826 037
- DE-C- 19 745 536

## Beschreibung

Die Erfindung betrifft ein Verfahren zum Steuern eines Stellgeräts. Sie betrifft insbesondere eine Stellgerät zum Steuern einer Brennkraftmaschine.

Aus der WO 99/17009 ist ein Verfahren zum Steuern eines Stellgeräts bekannt. Das Stellgerät hat ein Stellglied, das beispielsweise als Gaswechselventil einer Brennkraftmaschine ausgebildet ist. Ferner umfaßt das Stellgerät einen Stellantrieb mit zwei Elektromagneten, zwischen denen jeweils gegen die Kraft eines Rückstellmittels eine Ankerplatte durch Abschalten des Spulenstroms am haltenden Elektromagneten und Einschalten des Spulenstroms am fangenden Elektromagneten bewegt werden kann. Der Spulenstrom des jeweils fangenden Elektromagneten wird auf einen vorgegebenen Fangwert für eine vorgegebene Zeitdauer konstant gehalten. Dann wird unmittelbar vor dem Auftreffen der Ankerplatte auf die jeweilige Anlagefläche ein erhöhter Haltestrom für eine weitere vorgegebene Zeitdauer eingestellt bis sichergestellt ist, daß die Ankerplatte an der Anlagefläche anliegt. Anschließend wird ein Freilauf gesteuert, währenddessen der Strom abfällt, bis er einen vorgegebenen Haltewert erreicht, auf den er dann eingeregelt wird, bis die Ankerplatte wieder zu der anderen Anlagefläche bewegt werden soll. Der Strom wird dann auf einen Nullwert verringert.

Die Aufgabe der Erfindung ist es eine Verfahren zum Steuern eines Stellgeräts zu schaffen, das auch bei hohen Lasten eine präzise Ansteuerung des Stellgeräts gewährleistet.

Die Aufgabe wird erfindungsgemäß durch die Merkmale des unabhängigen Patentanspruchs gelöst. Vorteilhafte Ausgestaltungen der Erfindung sind in den Unteransprüchen gekennzeichnet.

Die Erfindung zeichnet sich dadurch aus, daß der Übergang von dem Steuern des Fangstroms oder des erhöhten Haltestroms in der Spule hin zu dem Steuern des Haltestroms mittels eines Betriebszustandes der schnellen Stromrücknahme erfolgt. Dadurch wird der Haltestrom wesentlich schneller erreicht als bei dem aus dem Stand der Technik bekannten Verfahren. Dadurch ist gewährleistet, daß selbst bei sehr hohen Drehzahlen und gleichzeitig geringer Motorlast einer Brennkraftmaschine die als Gaswechselventile ausgebildeten Stellglieder präzise angesteuert werden können, da das Haltestromniveau sehr schnell erreicht wird. Folgt dann das Abschalten der Spule aus dem Haltestromniveau, so kann vorab die Zeitdauer (Klebzeit), die benötigt wird, bis die Ankerplatte sich von der jeweiligen Anlagefläche löst, präzise ermittelt werden, da das Haltestromniveau vorgegeben ist.

Ausführungsbeispiele der Erfindung sind anhand der schematischen Zeichnungen näher erläutert. Es zeigen:
- Figur 1: eine Anordnung eines Stellgeräts und einer Steuereinrichtung in einer Brennkraftmaschine,
- Figur 2: zwei Leistungsendstufen der Steuereinrichtung,
- Figur 3a, 3b: Tabellen der Betriebszustände der ersten und zweiten Leistungsendstufe,
- Figur 4: ein Ablaufdiagramm zum Steuern der ersten Spule,
- Figur 5: ein weiteres Ablaufdiagramm zum Steuern der ersten Spule, und
- Figur 6: Signalverläufe des Stroms und der Spannungen.

Elemente gleicher Konstruktion und Funktion sind figurenübergreifend mit den gleichen Bezugs zeigen versehen.

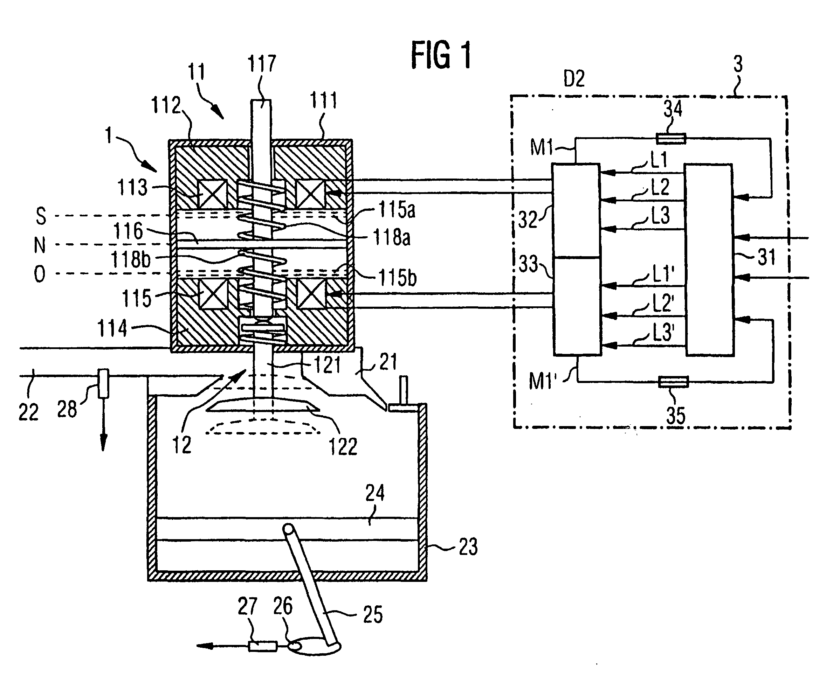

Ein Stellgerät (Figur 1) umfaßt einen Stellantrieb 11 und ein Stellglied 12, das bevorzugt als Gaswechselventil ausgebildet ist und einen Schaft 121 und einen Teller 122 hat. Der Stellantrieb 11 hat ein Gehäuse 111, in dem ein erster und ein zweiter Elektromagnet angeordnet sind. Der erste Elektromagnet hat einen ersten Kern 112, in den in einer ringförmigen Nut eine erste Spule 113 eingebettet ist. Der zweite Elektromagnet hat einen zweiten Kern 114, in den in einer weiteren ringförmigen Nut eine zweite Spule 115 eingebettet ist.

Ein Anker ist vorgesehen, dessen Ankerplatte 116 in dem Gehäuse 111 beweglich zwischen einer ersten Anlagefläche 115a des ersten Elektromagneten und einer zweiten Anlage 115b des zweiten Elektromagneten angeordnet ist. Der Anker umfaßt desweiteren einen Ankerschaft 117, der durch Ausnehmungen des ersten und zweiten Kerns 112, 114 geführt ist und der mit dem Schaft 121 des Stellglieds 12 mechanisch koppelbar ist.

Ein erstes Rückstellmittel 118a und ein zweites Rückstellmittel 118b spannen die Ankerplatte 116 in eine vorgegebene Ruheposition N vor.

Das Stellgerät 1 ist mit einem Zylinderkopf 21 starr verbunden. Dem Zylinderkopf 21 ist ein Ansaugkanal 22 und ein Zylinder 23 mit einem Kolben 24 zugeordnet. Der Kolben 24 ist über eine Pleuelstange 25 mit einer Kurbelwelle 26 gekoppelt.

Eine Steuereinrichtung 3 ist vorgesehen, die Signale von Sensoren erfaßt und/ oder Signale von einer nicht dargestellten übergeordneten Steuereinrichtung für Motorbetriebsfunktionen erfaßt und Stellsignale erzeugt, in deren Abhängigkeit die erste und zweite Spule 113, 115 des Stellgeräts 1 gesteuert werden. Die Sensoren, die der Steuereinrichtung 3 zugeordnet sind, sind ausgebildet als ein erster Strommesser 34, der einen Istwert I_AV1 des Stroms durch die erste Spule erfaßt, oder ein zweiter Strommesser 35, der einen Istwert I_AV2 des Stroms durch die zweite Spule erfaßt. Ferner sind der Steuereinrichtung 3 noch ein Luftmassensensor 28 oder ein Drehzahlsensor 27 zugeordnet. Wie in den erwähnten Sensoren können auch noch weitere Sensoren vorhanden sein.

Die Steuereinrichtung 3 umfaßt ferner eine Steuereinheit 31 und eine erste Leistungsendstufe 32 und eine zweite Leistungsendstufe 33. Die Steuereinheit 31 erzeugt abhängig vom Steuerbefehl der übergeordneten Steuereinrichtung und abhängig von den Istwerten I_AV1, I_AV2 des Stroms durch die erste und die zweite Spule 113, 115 Steuersignale für die Steuerleitungen L1, L2, L3, über die die Steuereinheit 31 elektrisch leitend mit der ersten Endstufe 32 verbunden ist, und Steuersignale für die Steuerleitungen L1', L2', L3', über die die Steuereinheit 31 elektrisch leitend mit der zweiten Endstufe 33 verbunden ist. Die erste und zweite Leistungsendstufe 32, 33 unterscheiden sich lediglich dadurch, daß die erste Leistungsendstufe 32 zum Ansteuern der ersten Spule 113 und die zweite Leistungsendstufe 33 zum Ansteuern der zweiten Spule 115 vorgesehen sind. Die Schaltungsanordnung und Funktionsweise ihrer Bauelemente ist äquivalent.

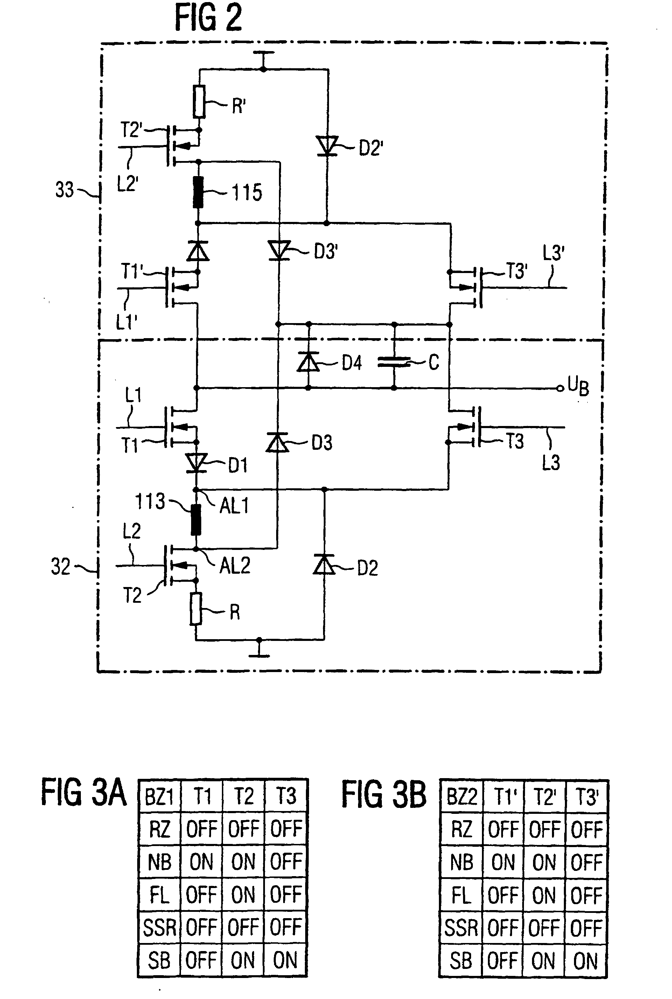

Im folgenden wird beispielhaft die erste Leistungsendstufe 32 beschrieben. Die erste Leistungsendstufe 32 (Figur 2) hat einen ersten Transistor T1, dessen Gate-Anschluß mit der Steuerleitung L1 elektrisch leitend verbunden ist, einen zweiten Transistor T2, dessen Gate-Anschluß elektrisch leitend mit der Steuerleitung L2 verbunden ist und einen dritten Transistor T3, dessen Gate-Anschluß elektrisch leitend mit einer Steuerleitung L3 verbunden ist.

Die erste Leistungsendstufe 32 umfaßt ferner Dioden D1, D3, D4, eine Freilaufdiode D2, einen vorzugsweise als Kondensator C ausgebildeten elektrischen Energiespeicher und einen Widerstand R, der als Meßwiderstand für den Strommesser 34 vorgesehen ist.

Die erste Leistungsendstufe 32 kann in fünf verschiedene Betriebszustände BZ1 gesteuert werden, die jeweils charakterisiert sind durch den jeweiligen Schaltzustand des Transistors T1, T2, T3. Liegt an den Gate-Anschlüssen der vorzugsweise als MOS-Transistor ausgebildeten Transistoren T1, T2, T3 ein hohes Spannungspotential an, so ist der jeweilige Transistor T1, T2, T3 von seinem Drain-Anschluß hin zum Source-Anschluß leitend (ON). Liegt hingegen an dem jeweiligen Transistor T1, T2, T3 an dessen Gate-Anschluß ein niedriges Spannungspotential an, so sperrt der Transistor von seinem Drain-Anschluß zu seinem Source-Anschluß (OFF). Die fünf Betriebszustände BZ1 sind in Figur 3a mit den zugehörigen Schaltzuständen der Transistoren T1, T2, T3 aufgetragen. Die fünf Betriebszustände BZ1 sind ein Ruhezustand RZ, Normal-Bestromen NB, Freilauf FL, Schnelle Stromrücknahme SSR und Schnell-Bestromen SB.

In dem Betriebszustand BZ1 des Normal-Bestromens NB werden die Transistoren T1 und T2 leitend betrieben (ON) und der Transistor T3 nicht leitend betrieben (OFF). Strom fließt dann von einer Spannungsquelle mit dem Potential der Versorgungsspannung U_{B} durch den Transistor T1, die Diode D1, den Anschluß AL1 der ersten Spule 113, durch die erste Spule 113 hin zu dem Anschluß AL2 der ersten Spule 113, durch den Transistor T2 und dem Widerstand R hin zu einem Masseanschluß, der auf einem Bezugspotential ist.

Solange die Spule nicht in Sättigung betrieben wird, fällt nahezu die gesamte Versorgungsspannung U_{B} an der ersten Spule 113 ab. Der Strom steigt entsprechend des Verhältnisses des Spannungsabfalls an der ersten Spule 113 und der Induktivität der ersten Spule 113 an.

In dem Betriebszustand des Freilaufs FL wird der Transistor T2 leitend betrieben (ON), die Transistoren T1, T3 hingegen werden nicht leitend betrieben (OFF). Fließt dem Zeitpunkt des Übergangs in den Betriebszustand des Freilaufs FL ein Strom von dem Anschluß AL1 durch die erste Spule 113 hin zum Anschluß AL2, so wird die Freilaufdiode D2 leitend und der Strom durch die erste Spule 113 nimmt abhängig von dem Verlust in der Spule 113, in dem Transistor T2, dem Widerstand R und der Freilaufdiode D2 ab. Der Spannungsabfall an der ersten Spule 113 ist dann gegeben durch die Durchlaßspannungen der Freilaufdiode und des Transistors T2 und dem Spannungsabfall an dem Widerstand R (insgesamt beispielsweise ein Volt).

In einem Betriebszustand BZ1 der Schnellen Stromrücknahme SSR werden die Transistoren T1, T2 und T3 nicht leitend betrieben. Fließt bei dem Übergang in den Betriebszustand BZ1 der Schnellen Stromrücknahme SSR ein Strom durch die erste Spule 113, so werden die Freilaufdiode D2 und die Diode D3 leitend. Der Strom fließt dann von dem Bezugspotential über die Freilaufdiode D2 hin zu dem Anschluß AL1 der ersten Spule 113 und dann durch die erste Spule 113 hin zu dem Anschluß AL2. Von dort fließt der Strom über die Diode D3 hin zu dem Kondensator C und lädt diesen auf.

Der Strom durch die erste Spule 113 reduziert sich in dem Betriebszustand der Schnellen Stromrücknahme SSR wesentlich schneller als in dem Betriebszustand BZ1 des Freilaufs FL, da in der ersten Spule 113 die negative Versorgungsspannung U_{B} verringert um den Spannungsabfall U_{T} an dem Kondensator C und den Durchlaßspannungen der Freilaufdiode D2 und der Diode D3 abfällt. In dem Betriebszustand der Schnellen Stromrücknahme SSR bilden die erste Spule 113 und der Kondensator C einen ersten Schwingkreis.

In dem Betriebszustand des Schnellen-Bestromens SB wird der erste Transistor T1 nicht leitend betrieben (OFF) und die Transistoren T2 und T3 leitend betrieben (ON). Strom fließt von der Spannungsquelle über den Kondensator C, der dabei entladen wird, den Transistor T3 hin zu dem Anschluß AL1 der ersten Spule 113 durch die erste Spule 113 hin zu dem Anschluß AL2 der ersten Spule 113, durch den Transistor T2 und dem Widerstand R2 hin zu dem Bezugspotential.

In dem Betriebszustand des Schnell-Bestromens SB ist der Spannungsabfall an der ersten Spule 113 gleich der Summe aus der Versorgungsspannung U_{B} und dem Spannungsabfall an dem Kondensator C verringert um die Durchlaßspannungen des Transistors T2 und T3 und dem Spannungsabfall an dem Meßwiderstand R. Der Spannungsabfall an der ersten Spule 113 beträgt dann bei einer Versorgungsspannung U_{B} von etwa 42 Volt beispielsweise etwa 80 Volt. Der Anstieg des Stroms durch die erste Spule 113 ist dann in etwa doppelt so hoch, als wenn lediglich die Versorgungsspannung U_{B} an der ersten Spule 113 abfällt. Das Spannungspotential U_{C} des Kondensators C kann abgegriffen werden und der Wegfahrsperreneinheit 311 zugeleitet werden.

Die Bauelemente der zweiten Leistungsendstufe sind äquivalent zu denen der ersten Leistungsendstufe 32 und sind in Figur 3 lediglich durch einen Hochstrich gekennzeichnet. Die entsprechenden Schaltzustände der Transistoren T1', T2', T3' der zweiten Leistungsendstufe 33 sind analog zu Figur 3a in Figur 3b dargestellt.

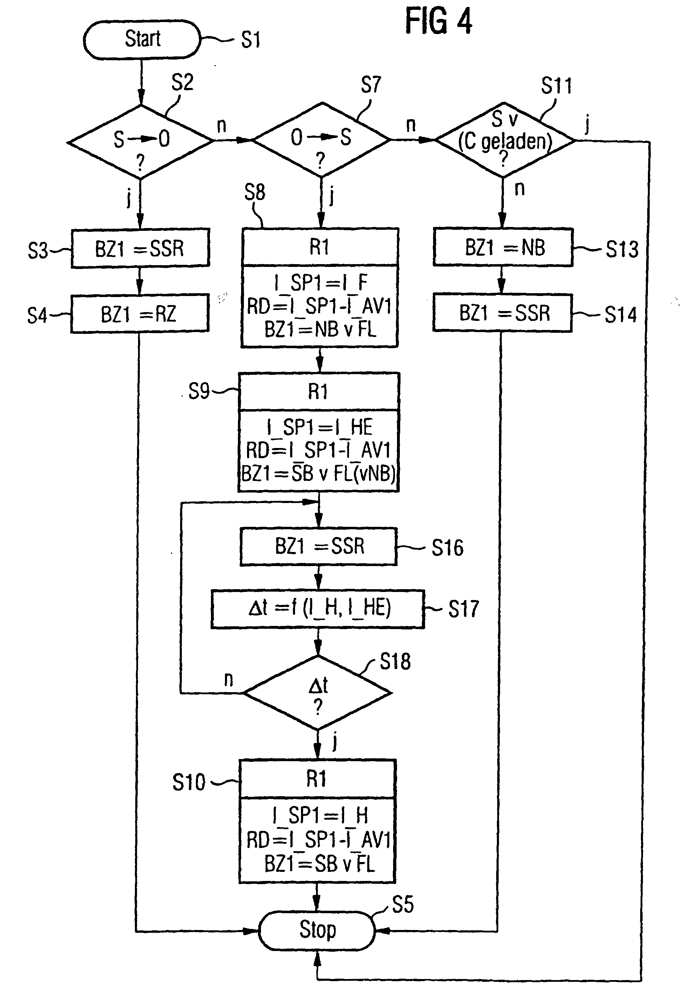

In Figur 4 ist ein Ablaufdiagramm eines ersten Programms dargestellt, das in der Steuereinheit 31 abgearbeitet wird. In einem Schritt S1 wird das Programm gestartet. Es wird die aktuelle Soll-Position der Ankerplatte 116 eingelesen, die von der übergeordneten Steuereinrichtung vorgegeben wird.

In einem Schritt S2 wird geprüft, ob sich die Soll-Position der Ankerplatte 116 seit dem letzten Aufruf des ersten Programmes von der Schließposition S zu der Offenposition O verändert hat. Ist dies der Fall, so wird in einem Schritt S3 die erste Leistungsendstufe 32 in den Betriebszustand BZ1 schnellen Stromrücknahme SSR gesteuert. Die erste Leistungsendstufe 32 geht in den Betriebszustand BZ1 des Ruhezustands RZ über, sobald der Strom durch die erste Spule 113 null wird. Das erste Programm wird dann im Schritt S5 beendet.

Ist die Bedingung des Schrittes S2 nicht erfüllt, so wird in einem Schritt S7 geprüft, ob seit dem letzten Aufruf des ersten Programms ein Übergang der Soll-Position der Ankerplatte 116 von der Offenposition O in die Schließposition S erfolgt ist. Ist dies der Fall, so wird in einem Schritt S8 ein erster Regler R1 aktiviert. Die Regelgröße des ersten Reglers R1 ist der Strom durch die erste Spule 113. Einem Sollwert I_SP1 des Stroms durch die erste Spule 113 wird ein Fangwert I_F zugeordnet. Eine Regeldifferenz RD wird berechnet aus der Differenz des Sollwertes I_SP1 und des Istwertes I_AV1 des Stroms durch die erste Spule 113.

Der erste Regler R1 ist vorzugsweise als Zweipunktregler ausgebildet. Der erste Regler R1 steuert die erste Endstufe 32 abhängig von der Regeldifferenz RD entweder in den Betriebszustand BZ1 des Normal-Bestromens NB oder des Freilaufs FL. Der Regler R1 bleibt aktiviert bis eine vorgegebene Bedingung erfüllt ist, die ein Anzeichen für ein Auftreffen der Ankerplatte 116 auf die erste Anlagefläche 115a ist. Die vorgegebene Bedingung kann beispielsweise sein, daß die Ankerplatte eine vorgegebene Position erreicht hat oder überschreitet. Diese vorgegebene Position ist dabei so gewählt, daß sie sehr nahe an der Schließposition S liegt.

Sobald die vorgegebene Bedingung erfüllt ist, wird die Bearbeitung in einem Schritt S9 fortgesetzt, in dem der erste Regler wieder aktiviert wird, wobei der Sollwert I_SP1 des Stroms durch die erste Spule 113 ein erhöhter Haltewert I_HE ist. Der erste Regler R1 steuert in dem Schritt S9 die erste Leistungsendstufe 32 abhängig von der Regeldifferenz RD entweder in den Betriebszustand BZ1 des Schnell-Bestromens SB oder in den Betriebszustand BZ1 des Freilaufs FL oder falls der Kondensator C entladen ist, in den Betriebszustand BZ1 des Normal-Bestromens NB.

Da der erhöhte Haltewert I_HE vorzugsweise größer ist als der Fangwert I_F, steuert der erste Regler in dem Schritt S9 die erste Leistungsendstufe 32 zuerst in den Betriebszustand des Schnell-Bestromens SB, bis der Istwert I_AV1 des Stroms durch die erste Spule größer ist als der erhöhte Haltewert I_HE, und/oder in den Betriebszustand des Normal-Bestromens, sobald der Kondensator C entladen ist und zwar bis der Istwert I_AV1 des Stroms durch die erste Spule größer ist als der erhöhte Haltewert I_HE.

Zum Zeitpunkt des Aktivierens des ersten Reglers R1 in dem Schritt S9 ist die Ist-Position der Ankerplatte 116 sehr nahe oder an der Schließposition S. Es muß für einen sicheren und zuverlässigen Betrieb des Stellgeräts gewährleistet sein, daß die Ankerplatte an der ersten Anlagefläche zuverlässig anliegt und weder abprallt noch vor Erreichen der Schließposition S in die Ruheposition N abfällt. Durch das Steuern des Betriebszustandes BZ1 des Schnell-Bestromens SB kann der Istwert I_AV1 des Stroms durch die erste Spule 113 sehr schnell auf den erhöhten Haltewert I_HE eingestellt werden. Dies hat den Vorteil, daß der erste Regler R1 in dem Schritt S9 unmittelbar vor dem Auftreffen der Ankerplatte 116 auf die erste Anlagefläche 115a aktiviert werden kann, so daß die Geschwindigkeit der Ankerplatte nicht mehr wesentlich erhöht wird und damit das Auftreffgeräusch der Ankerplatte auf die erste Anlagefläche 115a gering ist. Nach Ablauf einer vorgegebenen Zeitdauer, die vorzugsweise durch Versuche ermittelt ist, wird die Bearbeitung in einem Schritt S16 fortgesetzt.

In dem Schritt S16 wird die erste Leistungsendstufe 32 in den Betriebszustand BZ1 der Schnellen Stromrücknahme SSR gesteuert.

In einem Schritt S17 wird eine Zeitdauer Δt abhängig von dem Wert des erhöhten Haltestroms I_HE und dem Haltestrom I_H ermittelt. Die Zeitdauer Δt ist ein Maß für die Zeitdauer, die der Istwert I_AV1 des Stroms durch die erste Spule benötigt um von dem erhöhten Haltestrom I_AE abzufallen auf den Haltestrom I_H. Das Ermitteln der Zeitdauer Δt in dem Schritt S17 kann beispielsweise mittels eines Kennfelds erfolgen. Alternativ kann jedoch die Zeitdauer Δt auch fest vorgegeben sein.

In einem Schritt S18 wird geprüft, ob die Zeitdauer seit dem Verlassen des Schrittes S9 und des Beginnens des Bearbeitens des Schrittes S16 länger ist als die Zeitdauer Δt. Ist dies nicht der Fall, so wird die Bearbeitung in dem Schritt S16 fortgesetzt und weiterhin der Betriebszustand BZ1 der schnellen Stromrücknahme SSR gesteuert. Eine erneute Bearbeitung des Schrittes S17 kann in diesem Fall auch unterbleiben.

Ist die Bedingung des Schrittes S18 jedoch erfüllt, so ist davon auszugehen, daß der Istwert I_AV1 des Stroms durch die erste Spule zumindest abgefallen ist auf den Haltestrom I_H. Durch das Steuern des Betriebszustands BZ1 der Schnellen Stromrücknahme wird gewährleistet, daß der Istwert I_AV1 des Stroms durch die erste Spule sehr schnell von dem erhöhten Haltewert I_HE zu dem Haltewert I_H verringert wird. Die Zeitdauer Δt beträgt beispielsweise in etwa 150 bis 200 µsec, was weniger als 1/5 der Zeitdauer ist, die benötigt würde, um den Strom von dem erhöhten Haltewert I_HE hin zum Haltewert I_H zu bringen, wenn die Spule in den Betriebszustand BZ1 des Freilaufs FL gesteuert würde.

In dem Schritt S10 wird der erste Regler R1 aktiviert, der Sollwert I_SP1 des Stroms durch die erste Spule 113 ist der Haltewert I_H und der Regler steuert die erste Leistungsendstufe 32 abhängig von der Regeldifferenz RD entweder in den Betriebszustand BZ1 des Normal-Bestromens NB oder den Freilauf FL bis ein Übergang der Soll-Position der Ankerplatte von der Schließposition S in die Offenposition O erfolgt. Anschließend wird die Bearbeitung des Programms in dem Schritt S5 beendet.

Ist die Bedingung des Schrittes S7 nicht erfüllt, so wird die Bearbeitung in einem Schritt S11 fortgesetzt, in dem geprüft wird, ob die Soll-Position der Ankerplatte 116 die Schließposition S ist oder ob der Kondensator C auf einen vorgegebenen Wert geladen ist.

Vorteilhaft ist, wenn ein Sensor vorgesehen ist, der den Spannungsabfall U_{C} am Kondensator C erfaßt, und aus dem erfaßten Spannungsabfall U_{C} die Ladung des Kondensators C ermittelt wird. Ist die Bedingung des Schrittes S11 erfüllt, so bleibt der erste Regler R1 wie in Schritt S10 aktiv, falls die Soll-Position der Ankerplatte 116 die Schließposition S ist, und das erste Programm wird in dem Schritt S11 beendet. Ist die Bedingung des Schrittes S11 jedoch nicht erfüllt, so wird die Bearbeitung in einem Schritt S13 fortgesetzt, in dem die erste Leistungsendstufe 32 in einen Betriebszustand BZ1 des Normal-Bestromens NB gesteuert wird, und zwar entweder für eine fest vorgegebene Zeitdauer oder bis der Istwert I_AV1 des Stroms durch die erste Spule 113 einen vorgegebenen Wert erreicht hat. Anschließend wird in einem Schritt S14 die Leistungsendstufe 32 in den Betriebszustand BZ1 der schnellen Stromrücknahme SSR gesteuert. So kann einfach der Kondensator C geladen werden, während die erste Spule 113 nicht zum Fangen oder Halten der Ankerplatte 116 bestromt wird. Die Bearbeitung des Programms wird dann in dem Schritt S5 beendet.

Das erste Programm wird zyklisch aufgerufen und zwar entweder in vorgegebenen Zeitabständen oder nach einer vorgegebenen Veränderung des Kurbelwellenwinkels. Während die Soll-Position der Ankerplatte 116 die Offen-Position O ist, wird somit die erste Leistungsendstufe 32 in den Schritten S3, S16 und S14 in den Betriebszustand BZ1 der schnellen Stromrücknahme SSR gesteuert und somit der Kondensator C innerhalb einer vorgegebenen Zeitdauer auf den vorgegebenen Wert geladen.

Vorteilhaft ist es, wenn die erste Spule 113 in dem Schritt S8 in den Betriebszustand des Freilaufs gesteuert wird, sobald die zum Erreichen der Schließposition S notwendige Energie der Ankerplatte zugeführt worden ist. Die Spule erste 113 ist dann im Freilauf FL, wenn die vorgegebene Bedingung erfüllt wird, die ein Anzeichen ist für das Auftreffen der Ankerplatte 116 auf die erste Anlagefläche 115a.

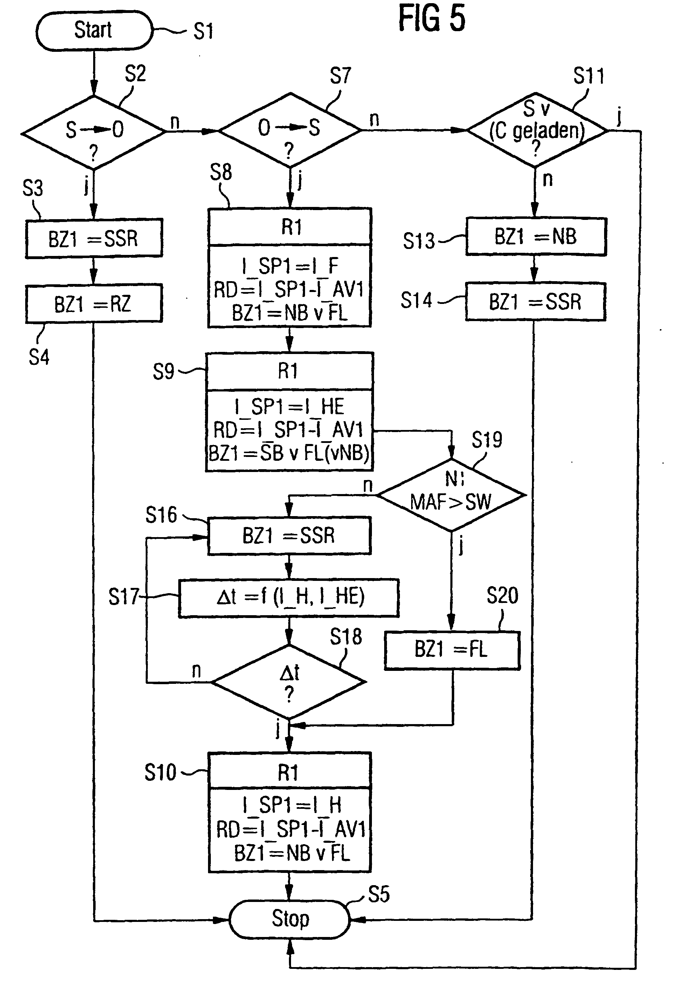

Ein Ablaufdiagramm eines zweiten Programms zum Steuern der ersten Spule 113 ist in Figur 5 dargestellt, das in der Steuereinheit 31 abgearbeitet wird. Das zweite Programm hat die gleiche Struktur wie das erste Programm (Figur 4). Im folgenden werden nur die Unterschiede zu dem ersten Programm beschrieben.

Anschließend an die Bearbeitung des Schrittes S9 wird in einen Schritt S19 geprüft, ob eine die Last repräsentierende Größe größer ist als ein vorgegebener Schwellenwert SW. Die die Last repräsentierende Größe ist beispielsweise die Drehzahl N und/ oder der Luftmassenstrom MAF. Der:Schwellenwert ist, bevorzugt durch Versuche an einem Motorprüfstand ermittelt. Dabei wird in dem Schritt S19 beispielsweise geprüft, ob die Drehzahl einen vorgegebenen Wert überschreitet und gleichzeitig der Luftmassenstrom MAF kleiner ist als ein vorgegebener weiterer Wert. Ist dies der Fall, so ist davon auszugehen, daß das Gaswechselventil nur für eine äußerst kurze Zeitdauer in den geöffneten Schaltzustand gesteuert wird. Der geöffnete Schaltzustand ist die Offenposition O. Danach wird dann die Bearbeitung in dem Schritt S16 fortgesetzt.

Ist die Bedingung des Schrittes S19 hingegen erfüllt, so wird die Bearbeitung in einem Schritt S20 fortgesetzt, in dem die erste Leistungsendstufe 32 in den Betriebszustand BZ1 des Freilaufs FL gesteuert wird. Der Betriebszustand BZ1 des Freilaufs in dem Schritt S20 wird so lange beibehalten, bis der Istwert I_AV1 durch die erste Spule in etwa den Haltewert I_H erreicht hat. Bei dieser Ausführungsform des Programms wird der Betriebszustand BZ1 der Schnellen Stromrücknahme SSR lediglich gesteuert, wenn die in dem Schritt S19 vorgegebene Bedingung erfüllt ist. Danach ist gewährleistet, daß lediglich Betriebszustände, in denen die Zeitdauer, während der die Offenposition für die Ankerplatte vorgegeben ist, so kurz ist, daß nur durch das Vorgehen gemäß des Schritts S16 bis S18, sichergestellt ist, daß vor dem Abschalten des Stroms durch die erste Spule der Regler R1 in dem Schritt S10 aktiv werden kann, d. h. daß ein definiertes Stromniveau - der Haltewert I_H beim Abschalten vorliegt. Hingegen wird in den sonstigen Fällen der Betriebszustand des Freilaufs in den Schritt S20 gesteuert, in dem die Verluste gering sind.

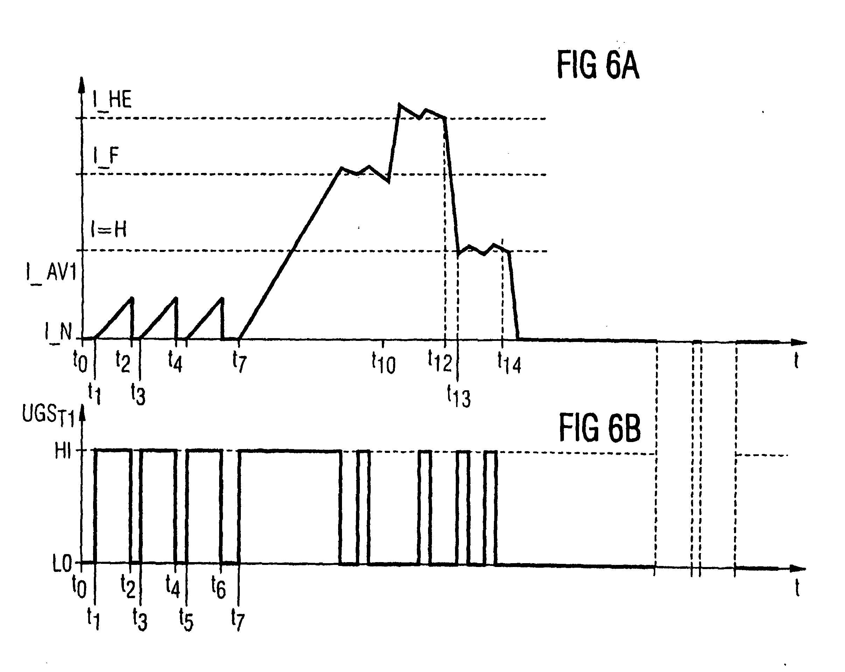

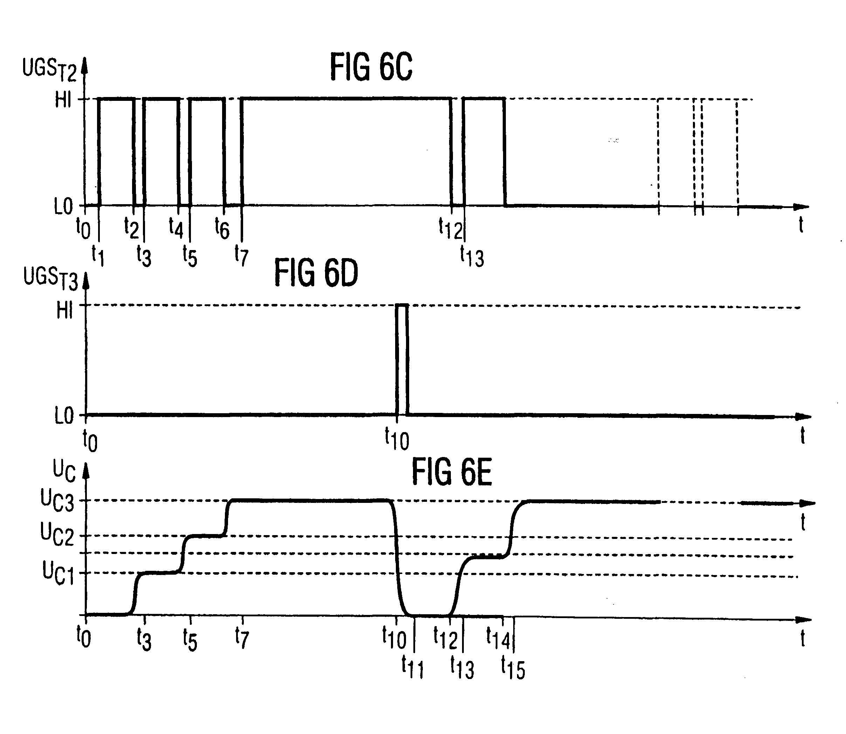

In den Figuren 6a bis 6e sind Signalverläufe aufgetragen über die Zeit t. In Figur 6a ist der zeitliche Verlauf des Istwertes I_AV1 des Stroms durch die erste Spule 113 aufgetragen. In Figur 6b ist der zeitliche Verlauf der Spannungsdifferenz UGS_{T1} zwischen dem Gate- und dem Source-Anschluß des Transistors T1 aufgetragen. In Figur 6c ist der zeitliche Verlauf der Spannungsdifferenz UGS_{T2} zwischen dem Gate-Anschluß und dem Source-Anschluß des Transistors T2 aufgetragen. In Figur 6d ist der zeitliche Verlauf der Spannungsdifferenz UGS_{T3} zwischen dem Gate-Anschluß und dem Source-Anschluß am Transistor T3 aufgetragen.

Falls die Spannungsdifferenz UGS_{T1} einen hohen Pegel HI hat, ist der Transistor T1 leitend (T1=ON). Falls die Spannungsdifferenz UGS_{T1} an dem Transistor T1 einen niedrigen Pegel LO hat, sperrt der Transistor, also ist nicht leitend (T1 = OFF). Ebenso leitet der Transistor T2, falls die Spannungsdifferenz UGS_{T2} einen hohen Pegel HI hat (T2=ON) und sperrt der Transistor T2, falls die Spannungsdifferenz UGS_{T2} einen niedrigen Pegel LO hat (T2=OFF). Falls die Spannungsdifferenz UGS_{T3} zwischen dem Gate-Anschluß und dem Source-Anschluß des Transistors T3 einen hohen Pegel hat, so ist der Transistor T3 leitend (T3 = ON). Falls die Spannungsdifferenz UGS_{T3} zwischen dem Gate-Anschluß und dem Source-Anschluß des Transistors T3 einen niedrigen Pegel hat, so sperrt der Transistor T3, das heißt er ist nicht leitend (T3 = OFF).

Zu einem Zeitpunkt t₀ ist die Soll-Position der Ankerplatte 116 die Offenposition O. Der Istwert I_AV1 des Stroms durch die Spule ist null. Zu einem Zeitpunkt t₁ wird die erste Leistungsendstufe 32 in einen Betriebszustand des Normal-Bestromens NB gesteuert und zwar bis zu dem Zeitpunkt t₂.

Von dem Zeitpunkt t₂ an wird die erste Leistungsendstufe 32 in den Betriebszustand BZ1 der schnellen Stromrücknahme SSR gesteuert. Bis zu dem Zeitpunkt t₃ hat sich der Spannungsabfall U_{C} an dem Kondensator C auf einen Wert U_{C1} erhöht. Ab dem Zeitpunkt t₃ wird die erste Leistungsendstufe 32 dann wieder in den Betriebszustand BZ1 des Normal-Bestromens NB gesteuert und zwar bis zu einem Zeitpunkt t₄. Ab dem Zeitpunkt t₅ wird die erste Leistungsendstufe 32 dann wieder in den Betriebszustand BZ1 der schnellen Stromrücknahme SSR gesteuert, so daß am Zeitpunkt t₅ der Spannungsabfall Uc an dem Kondensator C den Wert U_{C2} hat.

Ab dem Zeitpunkt t₅ wird die erste Leistungsendstufe 32 dann wieder in den Betriebszustand BZ1 des Normal-Bestromens gesteuert und zwar bis zu einem Zeitpunkt t₆, in dem sie dann wieder in den Betriebszustand BZ1 der schnellen Stromrücknahme SSR bis zum Zeitpunkt t₇ gesteuert wird. Ab dem Zeitpunkt t₇ ist der Sollwert I_SP1 des Stroms durch die erste Spule der Fangwert I_F und der erste Regler R1 wird wie in dem Schritt S8 (Figur 4) aktiviert und zwar bis zu einem Zeitpunkt t₁₀ die Position der Ankerplatte 116 einen vorgegebenen Wert nahe bei oder direkt an der ersten Anlagefläche 115a erreicht hat. Ab dem Zeitpunkt t₁₀ wird die erste Leistungsendstufe 32 in den Betriebszustand des Schnell-Bestromens SB gesteuert um sehr schnell den Istwert I_AV1 des Stroms durch die erste Spule auf den neuen Sollwert I_SP1 und zwar des erhöhten Haltewertes I_HE zu bringen und damit ggf. ein drohendes Abfallen des Ankers in die Ruhelage N oder ein starkes Prellen der Ankerplatte 116 zu verhindern. Dabei wird der Kondensator C entladen und der Spannungsabfall am Kondensator U_{C} verringert sich dementsprechend auf den Wert Null zum Zeitpunkt t₁₁.

Die erste Spule 113 wird dann bis zum Zeitpunkt t₁₂ mit dem erhöhten Haltestrom I_HE bestromt. Ab dem Zeitpunkt t₁₂ wird die erste Leistungsendstufe 32 in den Betriebszustand der schnellen Stromrücknahme SSR gesteuert, wodurch der Strom durch die erste Spule 113 steil abfällt.

Ab dem Zeitpunkt t₁₃ wird als Sollwert I_SP1 des Stroms durch die erste Spule der Haltewert I_H vorgegeben und ab dem Zeitpunkt t₁₄ wird als Soll-Position die Offenposition O vorgegeben.

Der Zeitpunkt t14 wird vorteilhaft zuvor berechnet, und zwar so, dass unter Berücksichtigung der Klebzeit die Ankerplatte sich zu einem vorab vorgegebenen Zeitpunkt von der Anlagefläche löst. Dies ermöglicht ein genaues Einstellen der Luftmasse in dem jeweiligen Zylinder der Brennkraftmaschine.
Die Klebzeit wird vorzugsweise aus einem Kennfeld abhängig von dem Haltewert I_H des Stroms ermittelt. Da sich der Haltewert in verschiedenen Betriebszuständen der Brennkraftmaschine nur wenig unterscheidet, kann das Kennfeld mit geringem Aufwand durch Versuche an einem Motorprüfstand ermittelt werden. Eine noch präzisere Ermittlung der Klebzeit kann erreicht werden, wenn die Werte des Kennfelds adaptiert werden abhängig von einer abhängig von der Position der Ankerplatte und der Zeit ermittelten Mess-Klebzeit. Alternativ zur Position kann hier auch ein sonstiges Signal verwendet werden, das eine Bewegung der Ankerplatte signalisiert.

Die Erfindung ist nicht auf das dargestellte Ausführungsbeispiel beschränkt. Beispielsweise können die Steuereinrichtung 3 und die übergeordnete Steuereinrichtung für Motorbetriebsfunktionen auch eine Einheit bilden.

## Patentansprüche

1. Verfahren zum Steuern eines Stellgeräts, das ein Stellglied und einen Stellantrieb (11) umfasst mit mindestens einem Elektromagneten, der eine Spule (113, 115) hat, und einem Anker, der zwischen einer ersten Anlagefläche (115a) an dem Elektromagneten und einer zweiten Anlagefläche (115b) beweglich ist und mit dem Stellglied koppelbar ist, wobei
- die Spule (113, 115) bis zu einem Zeitpunkt, an dem der Anker sicher an der Anlagefläche des Elektromagneten anliegt, mit einem Fangstrom oder einem erhöhten Haltestrom bestromt wird,
- dann ein Betriebszustand (BZ1,BZ2) der schnellen Stromrücknahme (SSR) gesteuert wird, in dem die Spule (113, 115) mit entgegengesetzter Polarität der Versorgungsspannung (U_{B}) im Vergleich zum Bestromen mit Fangstrom beaufschlagt wird, und
- anschliessend die Spule (113, 115) mit einem Haltestrom bestromt wird.

2. Verfahren nach Anspruch 1, **dadurch gekennzeichnet,**
- **dass** ein elektrischer Energiespeicher von der Spule (113,115) in dem Betriebszustand (BZ) der schnellen Stromrücknahme geladen wird.

3. Verfahren nach einem der vorstehenden Ansprüche, **dadurch gekennzeichnet,**
- **dass** das Stellglied als Gaswechselventil einer Brennkraftmaschine ausgebildet ist und
- **dass** alterniv zu dem Steuern des Betriebszustandes (BZ1,BZ2) der schnellen Stromrücknahme (SSR) ein Betriebszustand des Freilaufs (FL) gesteuert wird, wenn eine Bedingung erfüllt ist, die abhängt von mindestens einer die Last an einer Brennkraftmaschine repräsentierende Größe. -

4. Verfahren nach Anspruch 3, **dadurch gekennzeichnet, dass** die die Last repräsentierende Größe der Luftmassenstrom (MAF) und/oder die Drehzahl (N) ist.

5. Verfahren nach einem der vorstehenden Ansprüche, **dadurch gekennzeichnet, dass** der Betriebszustand der schnellen Stromrücknahme für eine vorgegebene Zeitdauer (Δt) gesteuert wird, die abhängig von dem vorgegebenen Haltestrom und dem Fangstrom beziehungsweise dem erhöhten Haltestrom ermittelt wird.

## Claims

1. Method for controlling an actuator, which comprises an actuating element and an actuating drive (11) having at least one electromagnet which has a coil (113, 115), and having an armature which can move between a first contact surface (115a) on the electromagnet and a second contact surface (115b) and can be coupled to the actuating element, where
- an initial current or a higher holding current flow through the coil (113, 115) until a time at which the armature is reliably in contact with the contact surface of the electromagnet,
- an operating state (BZ1, BZ2) of high-speed current reduction (SSR) is then selected, in which the opposite polarity of the supply voltage (U_{B}) in comparison to the initial current flow is applied to the coil (113, 115), and
- a holding current then flows through the coil (113, 115).

2. Method according to Claim 1, **characterized**
- **in that** an electrical energy store is charged from the coil (113, 115) in the operating state (BZ) of high-speed current reduction.

3. Method according to one of the preceding claims,
**characterized**
- **in that** the actuating element is in the form of an inlet or outlet valve of an internal combustion engine, and
- **in that**, as an alternative to the selection of the operating state (BZ1, BZ2) of high-speed current reduction (SSR) an operating state of free-wheeling (FL) is selected when a condition is satisfied which depends on at least one variable which represents the load on an internal combustion engine.

4. Method according to Claim 3, **characterized in that** the variable which represents the load is the air mass flow (MAF) and/or the rotation speed (N).

5. Method according to one of the preceding claims, **characterized in that** the operating state of high-speed current reduction is selected for a predetermined time period (Δt), which is determined as a function of the predetermined holding current and the initial current or the increased holding current.

## Revendications

1. Procédé pour la commande d'un appareil de réglage qui comprend un organe de réglage et un servomoteur (11) avec au moins un électroaimant qui comporte une bobine (113, 115), et un induit qui est déplaçable entre une première surface d'appui (115a) sur l'électroaimant et une seconde surface d'appui (115b) et qui peut être couplé à l'organe de réglage, dans lequel
- la bobine (113, 115) est alimentée par un courant de capture ou par un courant de maintien augmenté jusqu'à un instant auquel l'induit s'appuie de manière sure sur la surface d'appui de l'électroaimant,
- ensuite, un état de fonctionnement (BZ1, BZ2) de reprise de courant rapide (SSR) est commandé dans lequel la bobine (113, 115) est alimentée avec une polarité inverse de la tension d'alimentation (U_{B}) par comparaison avec l'alimentation par un courant de capture, et
- ensuite, la bobine (113, 115) est alimentée par un courant de maintien.

2. Procédé selon la revendication 1, **caractérisé en ce que**
- un accumulateur d'énergie électrique est chargé par la bobine (113, 115) en état de fonctionnement (BZ) de reprise de courant rapide.

3. Procédé selon l'une quelconque des revendications précédentes,
**caractérisé en ce que**
- l'organe de réglage est conçu comme un sélecteur de circuit de gaz d'un moteur à combustion interne et
- en variante à la commande de l'état de fonctionnement (BZ1, BZ2) de reprise de courant rapide (SSR), un état de fonctionnement en régime libre (FL) est commandé lorsqu'une condition est remplie qui dépend d'au moins une valeur représentant la charge au niveau d'un moteur à combustion interne.

4. Procédé selon la revendication 3, **caractérisé en ce que** la valeur représentant la charge est le débit massique d'air (MAF) et/ou la vitesse de rotation (N).

5. Procédé selon l'une quelconque des revendications précédentes, **caractérisé en ce que** l'état de fonctionnement de reprise de courant rapide est commandé pour une durée prédéterminée (Δt) qui est déterminée en fonction du courant de maintien prédéterminé et du courant de capture ou du courant de maintien augmenté.
